(19) Europäisches Patentamt
European Patent Office
Office européen des brevets

(11) **EP 2 483 080 B1**

(12) **EUROPÄISCHE PATENTSCHRIFT**

(45) Veröffentlichungstag und Bekanntmachung des Hinweises auf die Patenterteilung:
**23.07.2014   Patentblatt 2014/30**

(21) Anmeldenummer: **10705147.6**

(22) Anmeldetag: **18.02.2010**

(51) Int Cl.:
**B41J 2/175** *(2006.01)*      **G01F 23/292** *(2006.01)*

(86) Internationale Anmeldenummer:
**PCT/EP2010/052059**

(87) Internationale Veröffentlichungsnummer:
**WO 2011/035935 (31.03.2011 Gazette 2011/13)**

(54) **TINTENPATRONE FÜR TINTENSTRAHLDRUCKER**

INK CARTRIDGE FOR INK JET PRINTERS

CARTOUCHE D'ENCRE POUR IMPRIMANTE À JET D'ENCRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **28.09.2009   PCT/EP2009/062530**
**18.01.2010   PCT/EP2010/050510**

(43) Veröffentlichungstag der Anmeldung:
**08.08.2012   Patentblatt 2012/32**

(73) Patentinhaber: **Pelikan Hardcopy Production AG 8620 Wetzikon (CH)**

(72) Erfinder:
• **BIANCO, Lucio**
**CH-8645 Jona (CH)**
• **SULSER, Daniel**
**CH-8636 Wald (CH)**

(74) Vertreter: **Popp, Eugen et al
Meissner, Bolte & Partner GbR
Postfach 86 06 24
81633 München (DE)**

(56) Entgegenhaltungen:
**EP-A1- 1 134 082      EP-A2- 0 573 274
EP-A2- 0 860 284      WO-A1-2009/074112
JP-A- 7 311 072**

**Beschreibung**

Die vorliegende Erfindung betrifft eine Tintenpatrone für Tintenstrahldrucker od. dgl. Aufzeichnungsgeräte, gemäß dem Oberbegriff des Anspruches 1.

Insbesondere bei Tintenpatronen, welche über Schlauchleitungen mit einem Druckkopf verbunden sind, aber auch bei anderen Patronen muß sichergestellt werden, daß diese Schlauchleitungen stets mit Tinte gefüllt bleiben. Andernfalls besteht die Gefahr lokaler Austrocknungen und der Unterbrechung der Tintenzufuhr. Aus diesem Grunde ist es auch wichtig, daß der Füllstand einer Tintenpatrone überwacht wird. Zu diesem Zweck weisen Drucker Einrichtungen auf, die feststellen, wie der Füllstand der Tintenpatrone ist, insbesondere feststellen, ob die Tintenpatrone leer ist bzw. in Kürze leer wird, um dann ein Weiterdrucken zu verhindern. Es wird angezeigt, daß ein Patronentausch geboten ist. Die Einrichtungen der genannten Art umfassen druckerseitig einen Lichtsendeteil und einen Lichtempfängerteil, wobei zwischen diesen beiden Teilen der Druckerpatrone zugeordnete Füllstands-Erkennungsmittel plazierbar sind. Beim Stand der Technik gemäß der DE 10 2007 001 084 A1 weist die Tintenpatrone zu diesem Zweck eine eine lichtundurchlässige oder alternativ lichtreflektierende Fahne umfassende Füllstandsanzeige auf, wobei die Fahne mit einem innerhalb der Tintenpatrone bzw. des Gehäuses derselben angeordneten Schwimmer verbunden ist, derart, daß die Fahne mit sinkendem Füllstand entweder in oder aus dem Bereich einer im Drucker angeordneten Lichtschranke bewegbar ist.

Alternativ kann die Fahne an einer drehbar gelagerten Schwimmereinrichtung angeordnet sein. Wird ein vorbestimmter Füllstand unterschritten, wird die Lichtschranke freigegeben, d.h. der Lichtstrahl geht ungehindert vom Lichtsendeteil durch die Patrone hindurch zum Lichtempfängerteil. Dadurch wird eine vorbestimmte Prozedur ausgelöst unter Anzeige, daß ein Patronentausch geboten ist.

Bei einem weiteren Stand der Technik umfassen die Füllstands-Erkennungsmittel eine erste außerhalb der Patrone angeordnete und dem Lichtsendeteil zugewandte Lichtstrahl-Umlenkfläche, ein innerhalb der Patrone abhängig vom Füllstand mit Tinte be- oder von Tinte entnetzbares Umlenkprisma, und eine zweite außerhalb der Patrone angeordnete und dem Lichtempfängerteil zugewandte Lichtstrahl-Umlenkfläche. Wenn das innerhalb der Patrone angeordnete Umlenkprisma füllstandsbedingt benetzt wird, tritt der durch die erste Lichtstrahl-Umlenkfläche in das Umlenkprisma gelenkte Lichtstrahl in die Tinte ein und wird dort absorbiert. Fällt der Füllstand unterhalb des Umlenkprismas, wird dieses entnetzt und der in das Umlenkprisma eintretende Lichtstahl über eine Totalreflexion weitergelenkt, so daß er aus dem Umlenkprisma wieder austritt. Der austretende Lichtstrahl wird dann durch die zweite Lichtstrahl-Umlenkfläche in das Lichtempfängerteil gelenkt. Dann erfolgt wiederum das bereits erwähnte Signal, daß die Patrone leer ist und ausgetauscht werden muß.

Diese letztgenannte Lösung hat den Nachteil, daß die erste und zweite Lichtstrahl-Umlenkfläche jeweils mit einer gesonderten Licht-reflektierenden Oberfläche versehen werden müssen. Zu diesem Zweck werden beim Stand der Technik die entsprechenden Flächen mit hochglänzenden Aluminiumfolien versehen. Der Aufwand für die Herstellung der ersten und zweiten Lichtstrahl-Umlenkflächen ist dementsprechend groß. Auch können diese Umlenkflächen sehr leicht durch unsachgemäße Behandlung beschädigt und damit unbrauchbar gemacht werden.

Aus der EP 0 573 274 A2 ist eine Tintenpatrone gemäß dem Oberbegriff des Anspruches 1 bekannt, wobei dort eine Lichtstrahl-Umlenkung im Bereich der beiden Schenkel des U-förmigen Umlenk-Elements nicht vorgesehen ist. Lichtstrahlumlenktechnisch haben die beiden Schenkel des bekannten Umlenk-Elements keine Funktion. Dementsprechend könnten die beiden Schenkel zu einem einheitlichen Umlenkblock zusammengefaßt sein, was auch praktisch der Fall ist; denn die beiden Schenkel werden lediglich durch einen schmalen Einschnitt an der außenliegenden Seite des Umlenkblocks definiert. Der relativ massive Umlenkblock ist integraler Bestandteil einer Seitenwand der Tintenpatrone, was herstellungstechnisch bedingt durch innere Spannung zwischen relativ dünnen Wandstärken einerseits und dicken Wandstärken andererseits problematisch ist.

Ähnlich verhält es sich beim Stand der Technik gemäß der JP 07 311072 A. Auch dort ist ein relativ massiver Lichtstrahl-Umlenkblock integraler Bestandteil einer im übrigen relativ dünnwandigen Tintenpatrone.

Der vorliegenden Erfindung liegt daher die Aufgabe zugrunde, die letztgenannten Versionen einer Tintenpatrone dahingehend zu verbessern, daß die Füllstands-Erkennungsmittel, insbesondere Lichtstrahl-Umlenkmittel einfacher hergestellt werden können mit der Folge, daß die Tintenpatrone insgesamt einfacher und preiswerter in der Herstellung wird.

Diese Aufgabe wird erfindungsgemäß durch die kennzeichnenden Merkmale des Anspruches 1 gelöst, wobei vorteilhafte Weiterentwicklungen, Abwandlungen und konstruktive Details in den Unteransprüchen beschrieben sind.

Einer der wesentlichen Aspekte der vorliegenden Erfindung liegt darin begründet, daß die erste und zweite jeweils außerhalb der Tintenpatrone angeordnete Umlenkfläche sowie die mit Tinte be- oder von Tinte entnetzbare Umlenkfläche Teil eines etwa U-förmigen Umlenk-Elements ist. Das derart ausgebildete Lichtstrahl-Umlenkelement definiert eine Art Mehrfachprisma. Die gesamte Füllstandserkennungseinrichtung ist eine einstückige, integrierte Reflexionseinrichtung.

Die erste und zweite Umlenkfläche sind an den beiden Schenkeln und die mit Tinte be- oder von Tinte entnetzbare Umlenkfläche an dem zwischen den beiden Schenkeln des etwa U-förmigen Umlenk-Elements angeordneten Steg ausgebildet. Des weitren zeichnet sich die vorliegende Erfindung dadurch aus, dass die freien Enden der beiden Schenkel eines etwa U-förmigen Umlenk-Elements jeweils ein Umlenkprisma mit nach außen gerichteter Spitze umfassen, wobei die eine jeweils dem Lichtsendeteil sowie dem Lichtempfängerteil zugewandte Schrägfläche die erste äußere und zweite äußere Lichtstrahl-Umlenkfläche bzw. Lichtstrahl-Eintrittsfläche und Lichtstrahl-Austrittsfläche definieren, während die jeweils anderen Schrägflächen eine innere Lichtstrahl-Umlenkfläche bilden.

Die Herstellung einer derartigen Patrone im Spritzgußverfahren ist denkbar einfach. Insbesondere ist hervorzuheben, daß aufgrund der äußerst kompakten Ausführungsform und eines dadurch begründeten kurzen Strahlengangs auch sehr kleine, lichtschwache Lichtquellen mit geringer Anregungsenergie verwendet werden können, um dennoch den Füllstand innerhalb der Tintenpatrone sicher zu detektieren.

Das etwa U-förmige Umlenk-Element ist so gestaltet, daß der vom Sendeteil ausgesendete Lichtstrahl in das Umlenk-Element eintritt und bei mit Tinte benetzter Umlenkfläche von der Tinte absorbiert wird, bei von Tinte entnetzter Umlenkfläche jedoch an der dem Lichtstrahl-Empfängerteil zugewandten Seite das Lichtstrahl-Umlenkelement wieder verläßt. Das Lichtstrahl-Umlenkelement ist also so ausgebildet, daß der Lichtstrahl zwischen der Lichtstrahl-Eintrittsfläche und der Lichtstrahl-Austrittsfläche innerhalb des Lichtstrahl-Umlenkelements mehrfach umgelenkt bzw. reflektiert wird, wobei der Austritt des Lichtstrahls davon abhängt, ob die der Tintenkammer zugewandte Umlenkfläche mit Tinte benetzt ist oder nicht.

Das etwa U-förmige Umlenk-Element ist vorzugsweise an der im montierten Zustand der Patrone oberen Seite des über eine Seitenfläche, insbesondere Frontfläche der Patrone vorspringenden Fortsatzes des Tintenaufnahmeraums der Patrone ausgebildet.

Des weiteren hat sich abhängig von den Materialien für das Umlenk-Element als vorteilhaft herausgestellt, wenn die beiden Schenkel des etwa U-förmigen Umlenk-Elements einen Winkel von < 90°, insbesondere etwa 35° bis 50° einschließen.

Wie schon erwähnt, soll der Lichtstrahl zwischen der Lichtstrahl-Eintrittsfläche und der Lichtstrahl-Austrittsfläche nur innerhalb des Lichtstrahl-Umlenkelements reflektiert werden, es sei denn, die der Tinte zugewandte Lichtstrahl-Umlenkfläche ist mit Tinte benetzt. Dann wird der Lichtstrahl in die Tinte hinein abgelenkt und von der Tinte absorbiert. In diesem Fall gelangt kein Lichtstrahl zum Lichtempfängerteil. Zu dem vorgenannten Zweck definieren die beiden Schenkel des etwa U-förmigen Umlenk-Elements zwischen der ersten äußeren und der zweiten äußeren Umlenkfläche, d.h. der Lichtstrahl-Eintrittsfläche und der Lichtstrahl-Austrittsfläche jeweils noch mindestens eine, insbesondere mindestens zwei weitere innere Lichtstrahl-Umlenkflächen.

Die innen liegenden Lichtstrahl-Umlenkflächen können zusätzlich verspiegelt sein, so daß bei entnetztem Zustand ein größerer Anteil zumindest des einfallenden Lichtstrahls reflektiert wird.

Die beiden vorgenannten Schrägflächen der endseitigen Umlenkprismen schließen vorzugsweise einen Winkel von etwa 45° bis 100°, insbesondere etwa 60° bis 70° ein.

Zu den vorgenannten Umlenkprismen sei noch erwähnt, daß bei einer konkreten Ausführungsform die dem Lichtsendeteil und dem Lichtempfängerteil zugewandten Lichtstrahl-Umlenkflächen im Querschnitt jeweils kürzer bemessen sind als die jeweils gegenüber liegenden Lichtstrahl-Umlenkflächen.

Durch die erfindungsgemäße Konstruktion entfallen sowohl die bekannte Schwimmereinrichtung als auch die gesonderten reflektierenden Flächen, die durch entsprechende Maßnahmen geschaffen werden müssen, entweder durch die Aufbringung Licht-reflektierender Folien oder die Aufdampfung einer Licht-reflektierenden Schicht. Wird eine besonderes schwache Lichtquelle benutzt und/oder ein Material verwendet, das beispielsweise zu einer stärkeren Tyndalstreuung des Lichts neigt, können dessen ungeachtet trotzdem die Licht-reflektierenden Seiten der beiden Schenkel des etwa U-förmigen Lichtstrahl-Umlenkelements mit Ausnahme der Lichtstrahl-Eintrittsfläche und der Lichtstrahl-Austrittsfläche verspiegelt ausgeführt werden. Dadurch wird erreicht, daß ein größerer Anteil der eingestrahlten Lichtmenge reflektiert wird. Verluste durch Streuung im Kunststoff oder bei nicht idealem Einfallswinkel können auf diese Art und Weise leicht ausgeglichen werden.

Wie oben ausgeführt, ist ein wesentlicher Aspekt der vorliegenden Erfindung darin begründet, daß äußere bzw. außerhalb der Patrone angeordnete Lichtstrahl-Umlenk-flächen integraler Teil eines über eine Seitenfläche, insbesondere Frontseite der Patrone vorspringenden Fortsatzes des Tintenaufnahmeraums der Tintenpatrone sind, wobei dieser Fortsatz eine innere, abhängig vom Füllstand mit Tinte be- oder von Tinte entnetzbare Lichtstrahl-Umlenkfläche umfaßt. Letztere ist Teil eines sich zwischen den beiden vorgenannten Schenkeln des etwa U-förmigen Lichtstrahl-Umlenkelements ausgebildeten Stegabschnittes.

Es sei an dieser Stelle auch noch erwähnt, daß in Kombination, aber auch unabhängig von den vorgenannten Ausführungsformen einer Füllstandserkennungseinrichtung eine sogenannte Montage-Erfassungseinrichtung vorgesehen sein kann, welche zwischen dem Lichtsendeteil und Lichtempfängerteil oder einem gesonderten Lichtstrahl-Detektor wirksam ist, und zwar derart, daß die Montage und/oder Demontage der Tintenpatrone erfaßbar ist. Zu diesem Zweck erstreckt sich die dem Lichtstrahl zugewandte Fläche der Montage-Erfassungseinrichtung in einem Winkel von >90° zum einfallenden Lichtstrahl, und ist ferner strukturiert ausgebildet. Insbesondere weist sie eine Wellenstruktur auf.

Damit ist sichergestellt, daß zum Beispiel bei der Montage oder Demontage der Tintenpatrone vom Tintenauslaß abspritzende Tintentröpfchen an der Montage-Erfassungseinrichtung bzw. an deren strukturierter Oberfläche festgehalten werden und nicht die darunter liegenden äußeren Lichtstrahl-Umlenkflächen abtropfen.

Die vorgenannte dem Lichtstrahl zugewandte Fläche der Montage-Erfassungseinrichtung ist vorzugsweise Teil eines relativ zur Tintenpatrone bewegbar gelagerten Lichtstrahl-Unterbrechungselements, das bei Montage und Demontage der Tintenpatrone jede beliebige, insbesondere asymmetrische Signalfolge erlaubt. Dieses Lichtstrahl-Unterbrechungselement ist vorzugsweise fingerartig mit kreisförmigem oder ellipsenförmigem Querschnitt ausgebildet.

Die Patrone kann auch noch eine obere, insbesondere an der oberen Vorderkante angeordnete Unterbrechernase aufweisen, deren bestrahlte Flächen sowohl in der Vertikalen als auch in der Horizontalen schräg verlaufen sowie eine horizontale Riffelung bzw. Wellenstruktur aufweisen derart, daß sich die Wellentäler und Wellenberge etwa horizontal erstrecken. Auch diese Oberflächenform dient dazu, versehentlich an diese Flächen gelangende Tintentröpfchen dort festzuhalten. Diese sollen also auf keinen Fall auf die Lichtstrahl-Umlenkflächen der Füllstandserkennungseinrichtung abtropfen.

Nachstehend wird eine bevorzugte Ausführungsform einer erfindungsgemäß ausgebildeten Tintenpatrone anhand der beigefügten Zeichnung erläutert. Diese zeigt in

Fig. 1 eine Ausführungsform einer erfindungsgemäß ausgebildeten Tintenpatrone in perspektivischer Ansicht von vorne schräg oben;

Fig. 2 die Tintenpatrone gemäß Fig. 1 von schräg vorne; und

Fig. 3 Füllstands-Erkennungsmittel der Tintenpatrone gemäß den Figuren 1 und 2 im schematischen Schnitt und vergrößerten Maßstab.

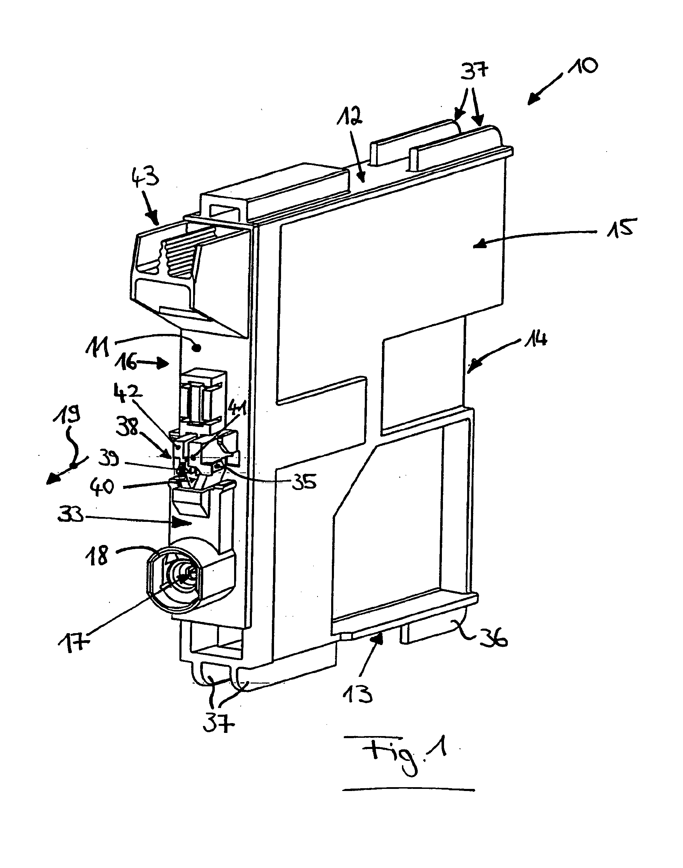

Die in Fig. 1 dargestellte Tintenpatrone ist mit der Bezugsziffer 10 gekennzeichnet. Diese besitzt eine flache Quaderform mit einer in Montagerichtung vorderen bzw. Frontseite 11, Oberseite 12, Unterseite 13, Rückseite 14 und Seitenflächen 15 bzw. 16. An der Frontseite 11 ist nahe der Unterseite 13 ein Tintenauslaß 17 ausgebildet. Der Tintenauslaß steht über die Frontseite 11 vor. Da es sich hierbei um an sich bekannte Konstruktionsmerkmale handelt, erübrigt sich eine nähere Beschreibung an dieser Stelle. Dem Tintenauslaß ist ein entsprechender druckerseitiger Anschluß zugeordnet. Die Montagerichtung ist in Fig. 1 mit dem Pfeil 19 gekennzeichnet.

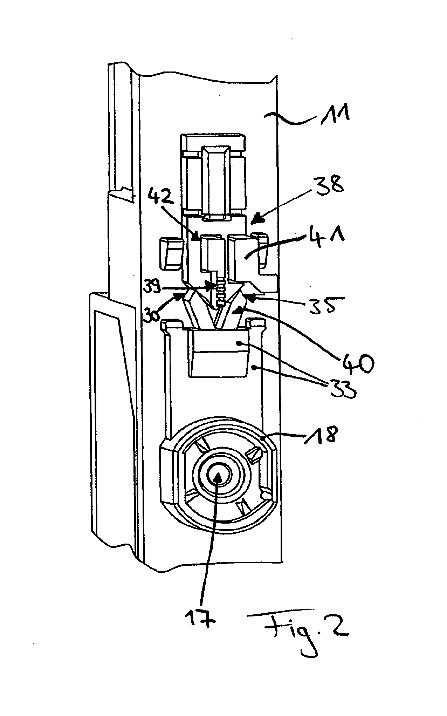

An der Frontseite 11 sind des weiteren Füllstands-Erkennungsmittel angeordnet. Diese umfassen eine erste außerhalb der Patrone 10 angeordnete und einem hier nicht näher dargestellten Lichtsendeteil zugewandte Lichtstrahl-Umlenkfläche 30, die eine sogenannte Lichtstrahl-Eintrittsfläche definiert. Gegenüberliegend ist eine Lichtstrahl-Austrittsfläche 35 angeordnet, durch die hindurch der Lichtstrahl bei Totalreflexion innerhalb eines diesen beiden Flächen zugeordneten Lichtstrahl-Umlenkelements 40 wieder austritt und auf einen Lichtempfängerteil trifft (siehe auch Fig. 2).

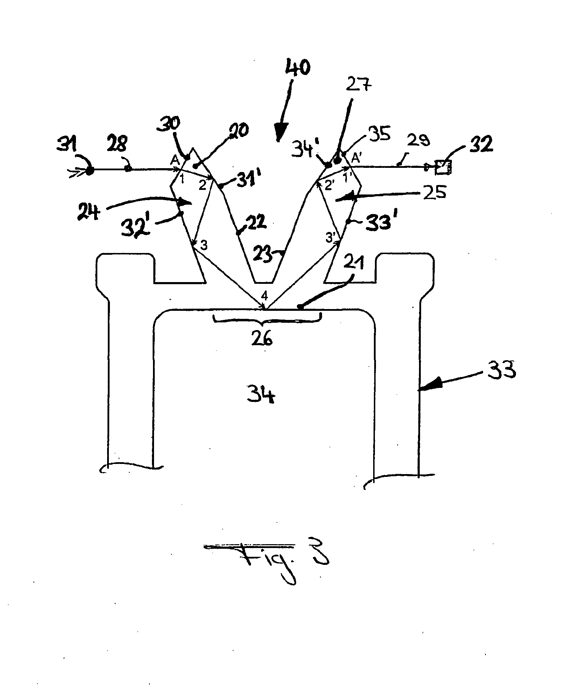

In Fig. 3 ist das vorerwähnte Lichtstrahl-Umlenkelement 40 etwas genauer dargestellt, insbesondere ist dort auch die erwähnte Totalreflexion des einfallenden Lichtstrahles schematisch dargestellt. In Fig. 3 ist der Lichtsendeteil mit der Bezugsziffer 31 und der Lichtempfängerteil mit der Bezugsziffer 32 gekennzeichnet.

Die vorgenannten Lichtstrahl-Umlenkflächen 30, 35 sind mit einer innerhalb der Patrone 10 abhängig vom Füllstand mit Tinte 34 be- oder von Tinte 34 entnetzbarer Umlenkfläche 21 (siehe Fig. 3) zu einem gemeinsamen Bauteil vereinigt, welches Teil eines über eine Seitenfläche, nämlich hier Frontseite 11 der Patrone 10 vorspringenden Fortsatzes 33 des Tintenaufnahmeraums der Tintenpatrone 10 ist. Insbesondere sind die erste außerhalb der Tintenpatrone 10 und die zweite außerhalb der Tintenpatrone angeordnete Umlenkfläche, d.h. die Lichtstrahl-Eintrittsfläche 30 und die Lichtstrahl-Austrittsfläche 35 sowie die mit Tinte be- oder von Tinte entnetzbare Umlenkfläche 21 Teil eines etwa U-förmigen Umlenk-Elements 40. Entsprechend Fig. 3 sind die Lichtstrahl-Eintrittsfläche 30 und die Lichtstrahl-Austrittsfläche 35 an den beiden Schenkeln 24, 25 und die mit Tinte 34 be- oder von Tinte 34 entnetzbare Umlenkfläche 21 an dem zwischen den beiden Schenkeln 24, 25 des etwa U-förmigen Umlenk-Elements 40 angeordneten Steg 26 ausgebildet.

Wie sämtliche Figuren des weiteren gut erkennen lassen, bildet das etwa U-förmige Umlenk-Element 40, insbesondere der den vorgenannten Steg 26 umfassende Teil desselben im montierten Zustand der Patrone 10 die obere Seite bzw. obere Begrenzung des über die Frontseite 11 der Patrone 10 vorspringenden Fortsatzes 33 des Tintenaufnahmeraums der Patrone 10.

Die beiden Schenkel 24, 25 des Umlenkelements 40 schließen einen Winkel von <90°, insbesondere etwa 35° bis 50°, vorzugsweise etwa 45° ein. Letztlich hängt dieser Winkel von dem Material des Umlenk-Elements und auch der Dicke und der Länge der Schenkel 24, 25 ab. Wie insbesondere Fig. 3 sehr gut erkennen läßt, definieren die beiden Schenkel 24, 25 des Umlenk-Elements 40 zwischen der ersten äußeren Umlenkfläche bzw. Lichtstrahl-Eintrittsfläche 30 und der zweiten äußeren Umlenkfläche bzw. Lichtstrahl-Austrittsfläche 35 jeweils noch mindestens eine, hier zwei weitere innere Lichtstrahl-Umlenkflächen 31', 32' bzw. 33', 34'.

Die freien Enden der beiden Schenkel 24, 25 umfassen bei der dargestellten Ausführungsform jeweils ein Umlenkprisma 20, 27 mit nach außen gerichteter Spitze. Die eine jeweils dem Lichtsendeteil 31 sowie dem Lichtempfängerteil 32 zugewandte Schrägfläche definieren die erste äußere Umlenkfläche bzw. Lichtstrahl-Eintrittsfläche 30 sowie zweite äußere Umlenkfläche bzw. Lichtstrahl-Austrittsfläche 35, während die jeweils anderen bzw. gegenüberliegenden Schrägflächen eine innere Lichtstrahl-Umlenkfläche bilden, die in Fig. 3 mit den Bezugsziffern 31', 34' gekennzeichnet sind. Die Schrägflächen 30, 31' bzw. 34', 35 der endseitigen Umlenkprismen 20, 27 schließen einen Winkel von etwa 35° bis 60°, insbesondere etwa 45° ein. Auch dieser Winkel hängt unter anderem vom Material des Umlenkelements 40 und damit vom Brechungsindex desselben ab.

Bei der dargestellten Ausführungsform sind die dem Lichtsendeteil 30 und dem Lichtempfängerteil 31 zugewandten Lichtstrahl-Umlenkflächen 30, 35 im Querschnitt der jeweils zugeordneten Umlenkprismen 20, 27 kürzer bemessen als die jeweils gegenüberliegenden Lichtstrahl-Umlenkflächen 31', 34'. Auch diese Dimensionierung hängt vom Material des Lichtstrahl-Umlenkelements 40 und damit von dem entsprechenden Brechungsindex ab. Es muß nur sichergestellt werden, daß der Lichtstrahl sicher auf die jeweils inneren Lichtstrahl-Umlenkflächen 31', 34' auftrifft.

Wie bereits erwähnt, sind die beiden Schenkel 24, 25 des Lichtstrahl-Umlenkelements 40 integraler Bestandteil des über die Frontseite 11 der Patrone nach vorne vorspringenden Fortsatzes 33 des Tintenaufnahmeraums.

Die beiden Schenkel 24, 25 und der dazwischen angeordnete Stegabschnitt 26 des Lichtstrahl-Umlenkelements 40 sind so dimensioniert, daß der Strahlengang bei Totalreflexion, d.h. bei entnetzter Umlenkfläche 21 innerhalb der beiden vorgenannten Schenkel und des vorgenannten Stegabschnitts bleibt. Der Ein- und Austritt erfolgt lediglich an der Lichtstrahl-Eintrittsfläche 30 bzw. Lichtstrahl-Austrittsfläche 35. Dementsprechend kann der Strahlengang durch äußere Einflüsse nicht gestört werden. Lediglich der einfallende Lichtstrahl 28 und der ausfallende Lichtstrahl 29 liegen außerhalb der Füllstands-Erkennungsmittel, was jedoch systembedingt notwendig ist.

Die Neigung der Lichtstrahl-Umlenkflächen und der Abstand derselben voneinander hängen unter anderem von der Tinte einerseits und von dem Material, aus dem das Lichtstrahl-Umlenkelement 40 ausgebildet ist, andererseits ab. So muß zum Beispiel bei Verwendung des Werkstoffs Polypropylen von folgenden Bedingungen ausgegangen werden:

Brechungsindizes

Luft: $n_{Air} \approx 1.00$
Polypropylen: $n_{pp} \approx 1.5$
Tinte: $n_{Ink} \approx 1.40$

Daraus ergeben sich folgende kritische Grenzwinkel zwischen den vorgenannten Licht-Umlenkflächen:

$$\text{PP/Luft:} \qquad \Theta_c = \text{asin} \ (n_{Air} \ / \ n_{pp}) \approx 42°$$

$$\text{PP/Tinte:} \qquad \Theta_c = \text{asin} \ (n_{Ink} \ / \ n_{pp}) \approx 69°$$

Bei dieser Konstellation wählt man vorzugsweise folgende Brechnungswinkel an den in Fig. 3 dargestellten Positionen:

A = 30° (Eintrittswinkel)
1 = 19.5°
2 = 45°
3=59°
4=51°
3'=59°
2' = 45°
1' = 19.5°
A' = 30° (Austrittswinkel)

Bei diesen Winkeln ist eine sichere Funktion auch bei produktionshedingten Fertigungstoleranzen gewährleistet, wobei natürlich auch Abweichungen von bis zu ± 1,5 bis 2,0° funktionssicher sind.

Grundsätzlich ist es auch denkbar, daß der eintretende Lichtstrahl von der ersten äußeren Eintrittsfläche unmittelbar zu der mit Tinte benetzbaren Fläche umgelenkt und bei Totalreflexion unmittelbar zur zweiten äußeren Lichtaustrittsfläche umgelenkt wird.

Es sei noch erwähnt, daß die Tintenpatrone 10 eine Belüftungsöffnung bzw. einen Belüftungskanal aufweist, der bzw. dem ein flüssigkeitsdichtes, aber luftdurchlässiges Sperrelement, insbesondere in Form einer folienartigen Membran zugeordnet ist. Diese Membran kann innen- oder außenseitig über die Belüftungsöffnung angebracht sein.

Wenn sich der Lufteinlaß oberhalb des Tintenauslasses 17 befindet, ist dieser Lufteinlaß mit einem sich innerhalb der Frontseite 11 erstreckenden Belüftungskanal verbunden, der im oberen Bereich der Tintenpatrone 10 in den Tintenaufnahmeraum hinein mündet. Im Bereich dieser Mündung ist die vorgenannte flüssigkeitsdichte, aber luftdurchlässige Membran angeordnet. Der Querschnitt der in den Tintenaufnahmeraum mündenden Luft-Austrittsöffnung ist vorzugsweise gegenüber dem Querschnitt des Belüftungskanals vergrößert, so daß eine entsprechende vergrößerte "Permeationsfläche" der sich über die Luft-Austrittsöffnung erstreckenden Membran erhalten wird. Der Wasserdurchbruchdruck der Membran liegt im Bereich von etwa 100 bis 180 kPa, insbesondere im Bereich von etwa 140 bis 160 kPa gemäß JIS L 1092. Die Membran ist abhängig von der verwendeten Tinte entweder hydrophob und/oder oliophob behandelt. Die Luftdurchlässigkeit der Membran liegt im Bereich von 3 bis 9 s/100 $_{CM}^3$ gemäß JIS P 8117. Die vorgenannten Belüftungselemente sind integraler Teil der Frontseite 11, die wiederum vorzugsweise separat vom übrigen Gehäuse der Tintenpatrone 10 hergestellt wird.

Dem Belüftungskanal kann auch ein sich nur in Richtung in den Tintenaufnahmeraum hinein öffenbares Rückschlagventil zugeordnet sein. Hierbei handelt es sich um eine Alternativlösung zu dem vorgenannten flüssigkeitsdichten, aber luftdurchlässigen Sperrelement, vorzugsweise in Form einer folienartigen Membran.

Vorzugsweise ist der Tintenauslaß 17 und die diesem zugeordnete Einlaßöffnung des Belüftungskanals durch eine gemeinsame Siegelfolie abdichtbar, die beim Einsetzen der Tintenpatrone entfern- oder aufbrechbar ist. Die Siegelfolie erstreckt sich über die Öffnung eines Ringvorsprungs 18, innerhalb der der Tintenauslaß 17 sowie die diesem zugeordnete und hier nicht näher dargestellte Einlaßöffnung des Belüftungskanals angeordnet sind.

Wie bereits erwähnt, ist bei einer herstellungstechnisch besonders vorteilhaften Ausführungsform die den Tintenauslaß 17 umfassende Seite 11 des den Tintenaufnahmeraum begrenzenden Gehäuses eine gesondert gefertigte Gehäusewand, hier Vorderwand, die neben dem Tintenauslaß 17 zumindest noch den Belüftungskanal samt Lufteinlaß und Luftaustritt sowie semi-permeable Membran oder Rückschlagventil, zum Beispiel in Form eines Ventillappens, umfaßt.

Sowohl die obere Wand als auch die Bodenwand weisen jeweils sich in Montagerichtung erstreckende Führungsleisten 36, 37 auf. Diesbezüglich handelt es sich um an sich bekannte Maßnahmen, die keiner weiteren Erläuterung bedürfen. Diese Führungsleisten entsprechen komplementären Führungsnuten in der Tintenpatrone zugeordneten Aufnahmegehäusen bzw. Patronenaufnahmen eines Tintenstrahldruckers od. dgl. Druckgerätes.

Bezüglich der vorgenannten Maßnahmen für die Belüftung der Tintenpatrone während des Betriebs zum Zwecke eines ausreichenden Druckausgleichs innerhalb des Tintenaufnahmeraums wird ergänzend auf den Inhalt der ebenfalls auf die Anmelderin zurückgehenden Deutschen Patentanmeldung Nr. 10 2009 026 081.1 verwiesen.

Die Tintenpatrone gemäß den Figuren 1 und 2 umfaßt noch eine Montage-Erfassungseinrichtung, welche zwischen dem Lichtsendeteil 31 und Lichtempfängerteil 32 wirksam ist derart, daß die Montage- und/oder Demontage der Tintenpatrone 10 erfaßbar ist. Konkret weist die Montage-Erfassungseinrichtung 38 ein relativ zur Tintenpatrone 10, nämlich relativ zur Füllstands-Erfassungseinrichtung 40 bewegbar gelagertes Lichtstrahl-Unterbrechungselement 39 auf, das bei Montage oder Demontage der Tintenpatrone jede beliebige, insbesondere asymmetrische Signalfolge erlaubt. Das Lichtstrahl-Unterbrechungselement 39 wird durch einen bei Montage/Demontage der Tintenpatrone wirksamen, ebenfalls relativ zu dieser bewegbar gelagerten Mitnehmer, insbesondere in Form eines Stößels 41 mitbewegt bzw. mitgeschleppt, jedoch jeweils zeitlich verzögert zur Bewegung des Stößels 41. Die Mitnahme des Lichtstrahl-Unterbrechungselements 39 erfolgt derart, daß der zugeordnete Lichtstrahl-Empfänger 32 bei Montage und Demontage der Tintenpatrone jeweils eine unterschiedliche Anzahl von Signalen (Unterbrechungssignalen) generiert, insbesondere nur ein Signal bei Montage, nicht aber bei Demontage der Tintenpatrone.

Der Mitnehmer bzw. Stößel 41 ist bei Montage der Tintenpatrone 10 gegen die Wirkung eines elastischen Elements in die Tintenpatrone bzw. in einen diese definierenden Behälter hinein bewegbar. Die Montagerichtung ist in Fig. 1 mit dem Pfeil 19 angedeutet. Wie Fig. 1 und auch Fig. 2 erkennen lassen, steht der Stößel 41 über die in Montagerichtung liegende Vorderseite 11 vor. Bei Montage der Patrone 10 ist der Stößel dann gegen die Wirkung der erwähnten Druckfeder in den Patronenbehälter hinein drückbar, wobei der Stößel 41 dabei nach einer ersten Wegstrecke das Lichtstrahl-Unterbrechungselement 39 über eine vorbestimmte zweite Wegstrecke mitnimmt. Das Lichtstrahl-Unterbrechungselement 39 weist eine wenigstens bei Montage der Tintenpatrone 10 durch den Lichtstrahl zwischen Lichtsendeteil 31 und Lichtempfängerteil 32 hindurch bewegbare lichtundurchlässige Fahne in Form eines Unterbrecherfingers auf, wie er vergrößert in Fig. 2 dargestellt ist. Dieser Unterbrecherfinger erstreckt sich etwa parallel zur Frontseite 11 und der Längserstreckung derselben, d.h. bei dem hier dargestellten Ausführungsbeispiel etwa vertikal nach unten.

Er wird durch eine längsverschieblich gelagerte Leiste 42 gehalten. Entsprechend den Figuren 1 und 2 ist der als Stößel ausgebildete Mitnehmer parallel zu der Leiste 42 des Lichtstrahl-Unterbrechungselements längsverschieblich gelagert, wobei bezüglich der konkreten Konstruktion erneut auf die DE 10 2009 026 107.9 der Anmelderin verwiesen wird.

Von besonderer Bedeutung ist, daß das Lichtstrahl-Unterbrechungselement 39, welches fingerartig ausgebildet ist, eine kegelstumpfförmige Grundstruktur aufweist, d.h. sich ausgehend von der Leiste 42 nach unten hin etwa konisch verjüngt. Des weiteren ist von Bedeutung, daß die Oberfläche des als Finger ausgebildeten Lichtstrahl-Unterbrechungselements 39 strukturiert, nämlich quergerifft ausgebildet ist. Konkret beschreibt die Oberfläche in Längsrichtung des Unterbrecherfingers eine durchgehende Welle. Diese Oberflächenstruktur soll gewährleisten, daß zufällig auftreffende Tintenspritzer am Unterbrecherfinger haften bleiben und nicht auf die darunter liegenden Lichtstrahleintritts- und -austrittsflächen 30 bzw. 35 tropfen.

Der Querschnitt des Unterbrecherfingers 39 kann kreisförmig oder ellipsenförmig ausgebildet sein, und zwar mit der längeren Achse etwa parallel zur Längserstreckung der Leiste 42.

An der oberen Vorderkante der Patrone 10 ist noch eine obere Unterbrechernase 43 ausgebildet, insbesondere angeformt. Diese befindet sich also am oberen Ende der Frontseite 11 der Tintenpatrone 10. Sie weist drei sich etwa parallel erstreckende Stege auf, wobei diese Stege zwei sich parallel zueinander erstreckende und jeweils nach vorne und oben offene Aufnahmeräume begrenzen, in die zum einen ein Lichtsendeteil und zum anderen ein Lichtempfängerteil bei Montage der Tintenpatrone eintaucht. Damit wird auch an dieser Stelle die Montage oder Demontage einer Patrone detektiert, sofern dies gewünscht und vorgesehen ist. Bei Montage ist der Lichtstrahl zwischen Lichtsendeteil und Lichtempfängerteil durch den mittleren Steg unterbrochen. Dieser mittlere Steg weist eine strukturierte Oberfläche auf, und zwar ist die Oberfläche an beiden Seiten des mittleren Stegs gewellt, so wie dies Fig. 1 sehr gut erkennen läßt. Des weiteren ist die Grundstruktur des mittleren Stegs so, daß die bestrahlten Flächen sowohl in vertikaler als auch in horizontaler Richtung jeweils einen keilförmigen Körper begrenzen. Der mittlere Steg ist also zweifachkeilförmig ausgebildet. Die den Lichtstrahl unterbrechenden Flächen des mittleren Steges erstrecken sich also in keinem Fall im rechten Winkel zum Lichtstrahl der Montage-Erfassungseinrichtung, wobei es sich hier um eine gesonderte Montage-Erfassungseinrichtung handelt, die zusätzlich zu der Montage-Erfassungseinrichtung vorgesehen sein kann, die dem Lichtstrahl-Unterbrechungselement 39 zugeordnet ist.

Alternativ kann auch nur die obere Montage-Erfassungseinrichtung vorgesehen sein. Letztlich hängt dies auch von der Konstruktion der Patronen-Aufnahme bzw. des zugeordneten Druckers und den dort integrierten Erfassungsmitteln ab.

Sämtliche in den Anmeldungsunterlagen offenbarten Merkmale werden als erfindungswesentlich beansprucht, soweit sie einzeln oder in Kombination gegenüber dem Stand der Technik neu sind.

**Bezugszeichen:**

| | |
|---|---|
| 10 | Tintenpatrone |
| 11 | Frontseite |
| 12 | Oberseite |
| 13 | Unterseite |
| 14 | Rückseite |
| 15 | Seitenfläche |
| 16 | Seitenfläche |
| 17 | Tintenauslaß |
| 18 | Ringvorsprung |
| 19 | Pfeil (Montagerichtung) |
| 20 | Umlenkprisma |
| 21 | mit Tinte be- oder von Tinte entnetzbare Umlenkfläche |
| 22 | innere Begrenzungsfläche |
| 23 | innere Begrenzungsfläche |
| 24 | erster Schenkel eines etwa U-förmigen Lichtstrahl-Umlenkelements 40 |
| 25 | zweiter Schenkel eines etwa U-förmigen Lichtstrahl-Umlenkelements 40 |
| 26 | Stegabschnitt |
| 27 | Umlenkprisma |
| 28 | einfallender Lichtstrahl |
| 29 | ausfallender Lichtstrahl |
| 30 | Lichtstrahl-Eintrittsfläche |
| 31 | Lichtsendeteil |

31' innere Lichtstrahl-Umlenkfläche
32 Lichtempfängerteil
32' innere Lichtstrahl-Umlenkfläche
33 Fortsatz
33' innere Lichtstrahl-Umlenkfläche
34 Tinte
34' innere Lichtstrahl-Umlenkfläche
35 Lichtstrahl-Austrittsfläche
36 Führungsleisten
37 Führungsleisten
38 Montage-Erfassungseinrichtung
39 Lichtstrahl-Unterbrechungselement
40 Lichtstrahl-Umlenkelement
41 Stößel
42 Leiste
43 Unterbrechernase

**Patentansprüche**

1. Tintenpatrone (10) für Tintenstrahldrucker mit an einer Seitenfläche (11, 14, 15, 16), insbesondere an der in der Montagerichtung (19) vorderen bzw. Frontseite (11) angeordneten Füllstandserkennungsmitteln, die im am Drucker montierten Zustand zwischen einem Lichtsendeteil (31) und einem Lichtempfängerteil (32) wirksam sind, wobei die Füllstandserkennungsmittel

   - eine erste außerhalb der Patrone (10) angeordnete und dem Lichtsendeteil (31) zugewandte Lichtstrahl-Umlenkfläche bzw. Lichtstrahl-Eintrittsfläche (30),
   - eine innerhalb der Patrone (10) abhängig vom Füllstand mit Tinte (34) be- oder von Tinte (34) entnetzbare Umlenkfläche (21), und
   - eine zweite außerhalb der Patrone (10) angeordnete und dem Lichtempfängerteil zugewandte Lichtstrahl-Umlenkfläche bzw. Lichtstrahl-Austrittsfläche (35) umfassen, und wobei

   die erste und zweite Lichtstrahl-Umlenkfläche bzw. Lichtstahl-Eintrittsfläche (30) und Lichtstrahl-Austrittsfläche (35) mit der durch Tinte (34) be- oder von Tinte (34) entnetzbaren Umlenkfläche (21) zu einem gemeinsamen Bauteil vereinigt sind, welches Teil eines über eine Seitenfläche (11, 14, 15, 16) der Patrone (10) vorspringenden Fortsatzes (33) des Tintenaufnahmeraums der Tintenpatrone (10) ist, und wobei ferner die erste (30) und zweite (35) jeweils außerhalb der Tintenpatrone (10) angeordnete Umlenkfläche bzw. die Lichtstrahl-Eintrittsfläche (30) und Lichtstrahl-Austrittsfläche (35) sowie die mit Tinte be- oder von Tinte entnetzbare Umlenkfläche (21) Teil eines etwa U-förmigen Umlenk-Elements (40) ist, **dadurch gekennzeichnet, daß** die freien Enden der beiden Schenkel (24, 25) des etwa U-förmigen Umlenkelements (40) jeweils ein Umlenkprisma (20, 27) mit nach außen gerichteter Spitze umfaßen, wobei die eine jeweils dem Lichtsendeteil (31) sowie dem Lichtempfängerteil (32) zugewandte Schrägfläche die Lichtstrahl-Eintrittsfläche (30) und Lichtstrahl-Austrittsfläche (35) definieren, während die jeweils anderen Schrägflächen eine innere Lichtstrahl-Umlenkfläche (31', 34') bilden.

2. Tintenpatrone nach Anspruch 1,
   **dadurch gekennzeichnet, daß**
   die Lichtstrahl-Eintrittsfläche (30) und Lichtstrahl-Austrittsfläche (35) an den beiden Schenkeln (24, 25) und die mit Tinte (34) be- oder von Tinte (34) entnetzbare Umlenkfläche (21) an dem sich zwischen den beiden Schenkeln (24, 25) des etwa U-förmigen Umlenkelements (40) erstreckenden Steg (26) ausgebildet sind.

3. Tintenpatrone nach Anspruch 1 oder 2,
   **dadurch gekennzeichnet, daß**
   das etwa U-förmige Umlenkelement (40) an der im montierten Zustand der Patrone (10) oberen Seite des über eine Seitenfläche (11, 14, 15, 16) der Patrone (10) vorspringenden Fortsatzes (33) des Tintenaufnahmeraums der Patrone (10) ausgebildet ist.

4. Tintenpatrone nach einem der Ansprüche 1 bis 3,

**dadurch gekennzeichnet, daß**
die beiden Schenkel (24, 25) des etwa U-förmigen Umlenkelements (40) einen Winkel von <90°, insbesondere etwa 35° bis 50° einschließen.

5. Tintenpatrone nach einem der Ansprüche 1 bis 4,
**dadurch gekennzeichnet, daß**
die beiden Schenkel (24, 25) des etwa U-förmigen Umlenkelements (40) zwischen der Lichtstrahl-Eintrittsfläche (30) und der Lichtstrahl-Austrittsfläche (35) jeweils noch mindestens eine, insbesondere mindestens zwei weitere innere Lichtstrahl-Umlenkflächen (31', 32' bzw. 33', 34') definieren.

6. Tintenpatrone nach Anspruch 1,
**dadurch gekennzeichnet, daß**
die beiden Schrägflächen (30, 31' bzw. 34', 35) der endseitigen Umlenkprismen (20, 27) einen Winkel von etwa 45° bis 100°, insbesondere etwa 60° bis 70° einschließen.

7. Tintenpatrone nach Anspruch 1 bis 6,
**dadurch gekennzeichnet, daß**
die dem Lichtsendeteil (31) und Lichtempfängerteil (32) zugewandten Lichtstrahl-Umlenkflächen (30, 35) im Querschnitt der jeweils zugeordneten Umlenkprismen (20, 27) kürzer bemessen sind als die jeweils gegenüber liegenden Lichtstrahl-Umlenkflächen (31', 34').

8. Tintenpatrone nach einem der Ansprüche 1 bis 7,
**dadurch gekennzeichnet, daß**
die beiden Schenkel (24, 25) des etwa U-förmigen Umlenkelements (40) so weit zusammengeschoben sind, daß die einander zugekehrten Flächen (22, 23) im Querschnitt ein "V" mit im montierten Zustand der Patrone (10) nach unten gerichteter Spitze definieren.

9. Tintenpatrone nach einem der Ansprüche 1 bis 8,
**dadurch gekennzeichnet, daß**
an der Frontseite (11) der Patrone (10) nahe deren Unterseite (13) ein Tintenauslaß (17) ausgebildet ist, wobei die Füllstandserkennungsmittel oberhalb desselben angeordnet sind.

10. Tintenpatrone nach einem der Ansprüche 1 bis 9,
**dadurch gekennzeichnet, daß**
die Füllstandserkennungsmittel jeweils integraler Bestandteil der Patrone (10) bzw. des Patronengehäuses, zumindest integraler Bestandteil der Frontseite (11) desselben sind.

11. Tintenpatrone nach einem der Ansprüche 1 bis 10,
**dadurch gekennzeichnet, daß**
die inneren Lichtstrahl-Umlenkflächen (31', 32' bzw. 33', 34') verspiegelt sind, derart, daß bei entnetztem Zustand ein größerer Anteil zumindest des einfallenden Lichtstrahls reflektiert wird.

12. Tintenpatrone nach einem der Ansprüche 1 bis 11,
**dadurch gekennzeichnet, daß**
eine Montage-Erfassungseinrichtung vorgesehen ist, welche zwischen dem Lichtsendeteil (31) und Lichtempfängerteil (32) oder einem gesonderten Lichtstrahl-Detektor wirksam ist, derart, daß die Montage und/oder Demontage der Tintenpatrone (10) erfaßbar ist, wobei die dem Lichtstrahl zugewandte Fläche der Montage-Erfassungseinrichtung sich in einem Winkel von >90° zum einfallenden Lichtstrahl erstreckt und ferner strukturiert ausgebildet ist, insbesondere eine Wellenstruktur aufweist.

## Claims

1. An ink cartridge (10) for inkjet printers with filled-level detection means arranged on a lateral surface (11, 14, 15, 16), in particular, on the front or respectively on the forward-facing side in the installation direction (19), which function, in the installed condition in the printer, between a light-transmitting component (31) and a light-receiving component (32), wherein the filled-level detection means comprise:

- a first light-beam deflecting surface or respectively light-beam inlet surface (30) arranged externally to the cartridge (10) and facing towards the light-transmitting component (31),
- a deflecting surface (21) within the cartridge (10) wettable with or dewettable from ink (34) dependent on the filled-level, and
- a second light-beam deflecting surface or respectively light-beam outlet surface (35) arranged externally to the cartridge (10), and wherein

the first and second light-beam deflecting surface, or respectively light-beam inlet surface (30) and light-beam outlet surface (35), are combined with the deflecting surface (21) wettable with or dewettable from ink (34) to form a common component which is part of a continuation (33) of the ink reservoir of the ink cartridge (10) projecting over a lateral surface (11, 14, 15, 16) of the cartridge (10), and wherein further
the first (30) and second (35) deflecting surface, or respectively the light-beam inlet surface (30) and light-beam outlet surface (35), each arranged externally to the cartridge (10), and the deflecting surface (21) wettable with or dewettable from ink, is part of an approximately U-shaped deflecting element (40),
**characterised in that**
the free ends of both limbs (24, 25) of the approximately U-shaped deflecting element (40) each comprise a deflecting prism (20, 27) with outwardly directed tip, wherein the one sloping surface, facing respectively towards the light-transmitting component (31) and the light-receiving component (32), define the light-beam inlet surface (30) and the light-beam outlet surface (35), while the other sloping surfaces each form an inner light-beam deflecting surface (31', 34').

2. The ink cartridge according to claim 1,
**characterised in that**
the light-beam inlet surface (30) and the light-beam outlet surface (35) on both limbs (24, 25) and the deflecting surface (21) wettable with or dewettable from ink (34) are embodied on the web (26) extending between the two limbs of the approximately U-shaped deflecting element (40).

3. The ink cartridge according to claim 1 or 2,
**characterised in that**
the approximately U-shaped deflecting element (40) is embodied on the upper side, in the installed condition of the cartridge (10), of the continuation (33) of the ink reservoir of the ink cartridge (10) projecting over a lateral surface (11, 14, 15, 16) of the ink cartridge (10).

4. The ink cartridge according to any one of claims 1 to 3,
**characterised in that**
the two limbs (24, 25) of the approximately U-shaped deflecting element (40) enclose an angle of <90°, in particular, approximately 35° to 50°.

5. The ink cartridge according to any one of claims 1 to 4,
**characterised in that**,
between the light-beam inlet surface (30) and the light-beam outlet surface (35), the two limbs (24, 25) of the approximately U-shaped deflecting element (40) each further define at least one, in particular, at least two, further, inner light-beam deflecting surfaces (31', 32' or respectively 33', 34').

6. The ink cartridge according to claim 1,
**characterised in that**
the two sloping surfaces (30, 31' or respectively 34', 35) of the deflecting prisms disposed at the ends (20, 27) enclose an angle of approximately 45° to 100°, in particular, approximately 60° to 70°.

7. The ink cartridge according to claim 1 to 6,
**characterised in that**
the light-beam deflecting surfaces (30, 35) facing towards the light-transmitting component (31) and light-receiving component (32) are dimensioned shorter in the cross section of each of the respectively associated deflecting prisms (20, 27) than the respective light-beam deflecting surfaces (31', 34') disposed opposite.

8. The ink cartridge according to any one of claims 1 to 7,
**characterised in that**
the two limbs (24, 25) of the approximately U-shaped deflecting element (40) are pushed together so far that the mutually facing surfaces (22, 23) define in cross section a "V" with tip directed downwards when the cartridge (10) is in the installed condition.

9. The ink cartridge according to any one of claims 1 to 8,
   **characterised in that**
   an ink outlet (17) is embodied on the front side (11) of the cartridge (10) near its underside (13), wherein the filled-level detection means are arranged above the same.

10. The ink cartridge according to any of claims 1 to 9,
    **characterised in that**,
    in each case, the filled-level detection means are an integral component of the cartridge (10) or respectively the cartridge housing, at least an integral component of the front side (11) of the same.

11. The ink cartridge according to any one of claims 1 to 10,
    **characterised in that**
    the inner light-beam deflecting surfaces (31', 32' or respectively 33', 34') are mirrored in such a manner that in the dewetted condition, a relatively larger proportion at least of the incident light-beam is reflected.

12. The ink cartridge according to any one of claims 1 to 11,
    **characterised in that**
    an installation-registering device is provided, which functions between the light-transmitting component (31) and the light-receiving component (32) or a separate light-beam detector in such a manner that the installation and/or removal of the ink cartridge (10) can be registered, wherein the light-beam-facing surface of the installation-registering device extends at an angle of >90° to the incident light-beam and is also embodied in a structured manner, comprising, in particular, a wavy structure.

## Revendications

1. Cartouche d'encre (10) pour imprimante à jet d'encre avec des moyens de détection du niveau de remplissage qui sont disposés sur une surface latérale (11, 14, 15, 16), en particulier sur le côté avant ou frontal (11) dans le sens de montage (19), et qui sont actifs à l'état monté sur l'imprimante entre une partie émettrice de lumière (31) et une partie réceptrice de lumière (32), les moyens de détection du niveau de remplissage comportant

   - une première surface de déviation de faisceau lumineux ou surface d'entrée de faisceau lumineux (30) tournée vers la partie émettrice de lumière (31) et disposée en dehors de la cartouche (10),
   - une surface de déviation (21) pouvant être mouillée avec de l'encre (34) ou desséchée dans la cartouche (10) selon le niveau de remplissage, et
   - une seconde surface de déviation de faisceau lumineux ou surface de sortie de faisceau lumineux (35) tournée vers la partie réceptrice de lumière et disposée en dehors de la cartouche (10), et

   la première et la seconde surface de déviation de faisceau lumineux ou surface d'entrée de faisceau lumineux (30) et surface de sortie de faisceau lumineux (35) étant réunies par la surface de déviation (21) pouvant être mouillée avec de l'encre (34) ou desséchée en un composant commun qui fait partie d'un prolongement (33) en saillie d'une surface latérale (11, 14, 15, 16) de la cartouche (10) de l'espace de réception d'encre de la cartouche d'encre (10) et de plus, la première (30) et seconde (35) surface de déviation ou surface d'entrée de faisceau lumineux (30) et surface de sortie de faisceau lumineux (35) disposées respectivement en dehors de la cartouche d'encre (10), ainsi que la surface de déviation (21) pouvant être mouillée avec de l'encre ou desséchée faisant partie d'un élément de déviation dont la forme est à peu près celle d'un U (40),
   **caractérisée en ce que**
   les extrémités libres des deux branches (24, 25) de l'élément de déviation (40) dont la forme est à peu près celle d'un U comportent respectivement un prisme de déviation (20, 27) avec une pointe dirigée vers l'extérieur, l'une surface oblique tournée respectivement vers la partie émettrice de lumière (31) et vers la partie réceptrice de lumière (32) définissant la surface d'entrée de faisceau lumineux (30) et la surface de sortie de faisceau lumineux (35) tandis que les autres surfaces obliques respectives forment une surface de déviation de faisceau lumineux (31', 34') intérieure.

**2.** Cartouche d'encre selon la revendication 1,
**caractérisée en ce que**
la surface d'entrée de faisceau lumineux (30) et la surface de sortie de faisceau lumineux (35) sont réalisées sur les deux branches (24, 25) et la surface de déviation (21) pouvant être mouillée avec de l'encre (34) ou desséchée est réalisée sur la nervure (26) s'étendant entre les deux branches (24, 25) de l'élément de déviation (40) dont la forme est à peu près celle d'un U.

**3.** Cartouche d'encre selon la revendication 1 ou 2,
**caractérisée en ce que**
l'élément de déviation (40) dont la forme est à peu près celle d'un U est réalisé, à l'état monté de la cartouche (10), sur le côté supérieur du prolongement (33) en saillie d'une surface latérale (11, 14, 15, 16) de la cartouche (10) de l'espace de réception d'encre de la cartouche (10).

**4.** Cartouche d'encre selon l'une quelconque des revendications 1 à 3,
**caractérisée en ce que**
les deux branches (24, 25) de l'élément de déviation (40) dont la forme est à peu près celle d'un U forment un angle < 90°, en particulier compris environ entre 35 et 50°.

**5.** Cartouche d'encre selon l'une quelconque des revendications 1 à 4,
**caractérisée en ce que**
les deux branches (24, 25) de l'élément de déviation (40), dont la forme est à peu près celle d'un U, entre la surface d'entrée de faisceau lumineux (30) et la surface de sortie de faisceau lumineux (35), définissent respectivement encore au moins une, en particulier au moins deux autres surfaces de déviation de faisceau lumineux (31', 32' ou 33', 34') intérieures.

**6.** Cartouche d'encre selon la revendication 1,
**caractérisée en ce que**
les deux surfaces obliques (30, 31' ou 34', 35) des prismes de déviation côté extrémité (20, 27) forment un angle compris entre environ 45 et 100°, en particulier environ entre 60 et 70°.

**7.** Cartouche d'encre selon la revendication 1 à 6,
**caractérisée en ce que**
les surfaces de déviation de faisceau lumineux (30, 35) tournées vers la partie émettrice de lumière (31) et la partie réceptrice de lumière (32) sont dimensionnées plus courtes en section transversale des prismes de déviation (20, 27) associés respectivement que les surfaces de déviation de faisceau lumineux (31', 34') respectivement opposées.

**8.** Cartouche d'encre selon l'une quelconque des revendications 1 à 7,
**caractérisée en ce que**
les deux branches (24, 25) de l'élément de déviation (40) dont la forme est à peu près celle d'un U sont poussées si loin que les surfaces (22, 23) tournées l'une vers l'autre définissent en section transversale un « V » avec la pointe dirigée vers le bas en l'état monté de la cartouche (10).

**9.** Cartouche d'encre selon l'une quelconque des revendications 1 à 8,
**caractérisée en ce**
**qu'**une sortie d'encre (17) est réalisée sur le côté frontal (11) de la cartouche (10) près de son côté inférieur (13), les moyens de détection du niveau de remplissage étant disposés au-dessus de celle-ci.

**10.** Cartouche d'encre selon l'une quelconque des revendications 1 à 9,
**caractérisée en ce que**
les moyens de détection du niveau de remplissage font partie intégrante respectivement de la cartouche (10) ou du boîtier de cartouche, au moins partie intégrante du côté frontal (11) de celui-ci.

**11.** Cartouche d'encre selon l'une quelconque des revendications 1 à 10,
**caractérisée en ce que**
les surfaces de déviation de faisceau lumineux (31', 32' ou 33', 34') intérieures sont rendues réfléchissantes de sorte qu'en cas d'état desséché, une plus grande partie au moins du faisceau lumineux incident est réfléchie.

**12.** Cartouche d'encre selon l'une quelconque des revendications 1 à 11,

**EP 2 483 080 B1**

**caractérisée en ce**

**qu'**un dispositif de détection de montage est prévu, lequel est actif entre la partie émettrice de lumière (31) et la partie réceptrice de lumière (32) ou un détecteur de faisceau lumineux séparé de telle manière que le montage et/ou le démontage de la cartouche d'encre (10) puisse être détecté, la surface tournée vers le faisceau lumineux du dispositif de détection de montage s'étendant en formant un angle > 90° avec le faisceau lumineux incident et étant de plus réalisé de manière structurée, présentant en particulier une structure ondulée.

EP 2 483 080 B1

Fig. 1

14

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007001084 A1
- EP 0573274 A2
- JP 7311072 A
- DE 102009026081
- DE 102009026107